# EUROPÄISCHE PATENTSCHRIFT

(11) **EP 1 618 314 B1**
(45) Veröffentlichungstag und Bekanntmachung des Hinweises auf die Patenterteilung: **27.09.2006**
(21) Anmeldenummer: 04740594.9
(22) Anmeldetag: 02.07.2004
(51) Int. Cl.: F16D 59/02, F16D 65/54, F16D 55/226

(54) **ZANGENBREMSE MIT FREISTELLUNG**
CALLIPER BRAKE WITH DISENGAGED POSITION
FREIN A PATINS A POSITION DE LIBERATION

(30) Priorität: 04.07.2003 DE 10330306
(43) Veröffentlichungstag der Anmeldung: 25.01.2006
(73) Patentinhaber: Chr. Mayr GmbH & Co. KG, D-87665 Mauerstetten (DE)
(72) Erfinder: EIBAND, Karl, 87616 Marktoberdorf (DE)
(74) Vertreter: Ruschke, Hans Edvard
(86) Internationale Anmeldenummer: PCT/EP2004/007243
(87) Internationale Veröffentlichungsnummer: WO 2005/003583

(56) Entgegenhaltungen:
- EP-A- 0 796 814
- EP-A- 0 935 082
- US-A- 3 983 971

## Beschreibung

Die vorliegende Erfindung betrifft Zangenbremsen, die eine abzubremsende Bremsscheibe am Umfang von beiden Seiten her umgreifen und beim Bremsen mit Reibbelägen auf die jeweilige Stirnfläche der Bremsscheibe drücken. Bei derartigen Zangenbremsen muß der Bremsenkörper schwimmend gelagert sein, damit bei einer Abnutzung der Reibbeläge dieser sogenannte Bremssattel sich an die Lage der Bremsscheibe anpassen kann. Eine derartige Zangenbremse ist im Oberbegriff des Patentanspruches 1 vorausgesetzt.

Zangenbremsen der Anmelderin mit freischwimmender Lagerung gehören zum Stand der Technik, siehe z.B. EP 0 796 814. Bei konkreten Ausführungsformen wurden beim Kunden teilweise Schleifgeräusche aus dem Anreiben der Reibbeläge an der Scheibe festgestellt. Diese Schleifgeräusche wurden als unzumutbar bewertet.

Eine Lösung dieses Problems wurde zunächst darin gesehen, eine Einstellung des Luftspaltes der zangenseitigen Reibfläche über drei Schrauben vorzusehen und das Andrücken der Bremse auf diese Schrauben mittels einer oder zwei Druckfedern einzustellen. Im Betrieb zeigte der Antrieb bei maximaler Belastung durch ein Biegemoment eine Verformung der Bremsscheibe zu der Bremsenbefestigung, wobei die Verformung größer als der Luftspalt der Bremse war. Dadurch reibt der Reibbelag dauernd auf der Ankerscheibe mit der Andrückkraft der Druckfedern. In vielen Fällen sind derartige Schleifgeräusche inakzeptabel: Beispielsweise sind Bremsen in Aufzügen geräuschgedämpft und vertragen keinen vergrößerten Luftspalt, was zu einem starken Anzugsgeräusch führt. Wenn die Bremsscheibe zu einem Antriebsmotor eines Aufzugs gehört, ist die Bremse während der Belastungswechsel (Betreten oder Verlassen der Aufzugskabine) eingefallen. Die elektromagnetisch gelüftete Zangenbremse ist somit ruhestrombetätigt, und zwar durch die entsprechende Druckfeder der Bremse.

Wenn die Bremse gelüftet ist, d. h. die Ankerscheibe an den Bremsenkörper elektromagnetisch angezogen wird, entsteht ein Luftspalt und die Bremsscheibe kann frei durchlaufen. Selbst wenn die Bremse genau gefertigt ist und eine sehr gute Lagerung besitzt, entstehen hier Schleifgeräusche. Diese werden um so stärker, je größer der sogenannte "Schlag" der Scheibe ist und je kleiner der Luftspalt an der elektromagnetisch gelüfteten Bremse eingestellt wird. Dieser kleine Luftspalt ist jedoch auch notwendig, um das Anzugsgeräusch an der Bremse klein zu halten.

Hiernach ist es die der vorliegenden Erfindung zugrundeliegende Aufgabe, eine Zangenbremse der eingangs genannten Art derart weiterzubilden, daß sowohl auf der linken als auch auf der rechten Seite der Bremsscheibe ein gleichmäßiger Luftspalt vorhanden ist und auch in dieser Position gehalten wird. Selbst bei womöglich ungleichmäßiger Abnutzung der Reibbeläge soll auf beiden Seiten dennoch ein gleichmäßiger Luftspalt vorhanden sein bzw. erzeugt werden.

Diese Aufgabe wird durch die Merkmale des Anspruches 1 gelöst. Mit Hilfe einer bügelartigen Reib- und Klemmvorrichtung wird diese Aufgabe gelöst; sie ist an dem einen Ende an der axial verschieblichen Ankerscheibe befestigt und an dem anderen Ende am schwimmend gelagerten Bremsengehäuse bzw. dem übergreifenden Sattel, welcher mit dem Bremsengehäuse fest verbunden ist. Durch die Bewegung der Ankerscheibe entsteht in der Vorrichtung eine geringfügige Verbiegung gegenüber dem Ausgangszustand und es entsteht ein gleichmäßiger Luftspalt auf beiden Seiten der Bremsscheibe. Der Drehpunkt der bügelartigen Vorrichtung befindet sich auf dem feststehenden Bolzen, auf dem zugleich das Bremsengehäuse schwimmend gelagert ist; der feststehende Bolzen seinerseits ist in einem feststehenden Maschinen-Gehäuse verankert.

Beim Lüften (Freimachen) der Bremse über einen Luftspalt s wird somit auf beiden Seiten der Bremsscheibe ein Luftspalt von s/2 erreicht und somit ein Schleifen der Bremse zuverlässig verhindert.

Die vorliegende Erfindung wird unter Bezugnahme auf die beigefügten Zeichnungen näher erläutert:

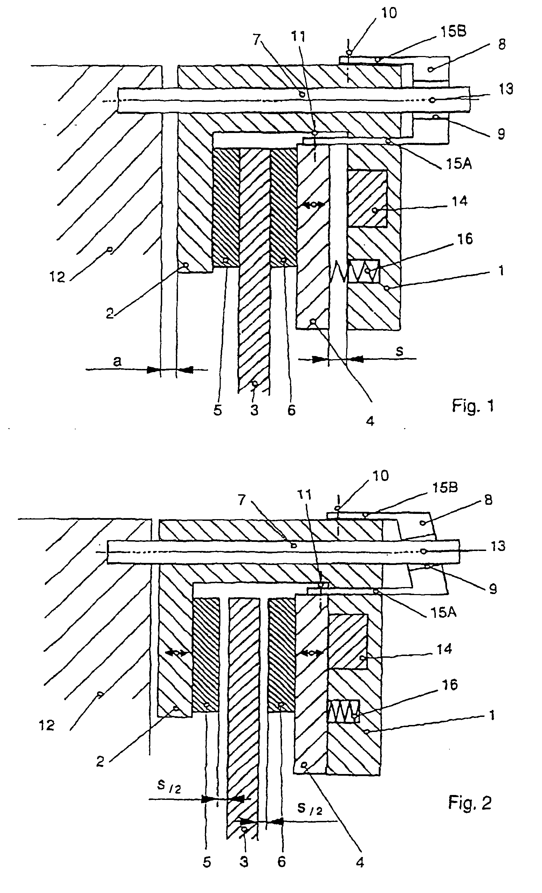

Die Figuren 1 bis 3 stellen eine Prinzipskizze der erfindungsgemäßen Bremse dar, und zwar:
   - Fig. 1: zeigt die Bremse im eingefallenen/gebremsten Zustand;
   - Fig. 2: zeigt die gleiche Bremse im gelüfteten Zustand, wobei die ausgleichende Wirkung des Bügels 8 dargestellt ist;
   - Fig. 3: zeigt die Bremse im gebremsten Zustand, allerdings entweder bei erhöhter Reibbelagabnutzung oder bei Axialverlagerung der Bremsscheibe 3 aufgrund von äußeren Einflüssen;
   - Fig. 4: ist eine Ansicht der Bremse in Richtung der Pfeiles X in Fig. 3 oder Fig. 5;
   - Fig. 5: ist eine Ansicht einer konkreten Bauform einer erfindungsgemäßen Bremse;
   - Fig. 5a, b und c: weitere Ausführungsformen;

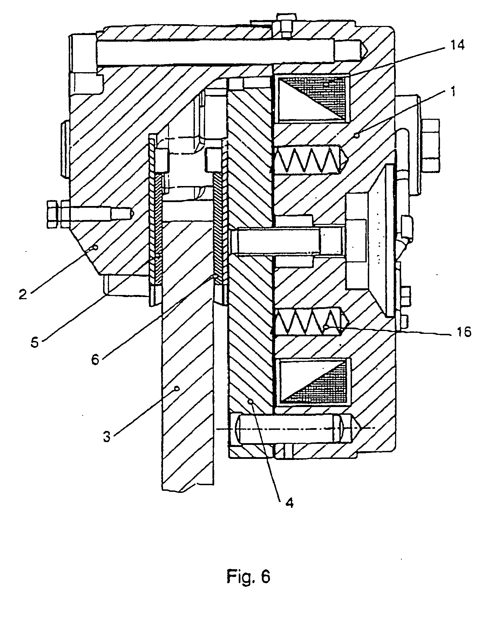

   - Fig. 6: ist ein Vertikalschnitt parallel zum feststehenden Bolzen 7.

Der Grundgedanke ist die Umleitung der Ankerbewegung relativ zum Spulenträger in eine Gegenbewegung des Spulenträgers und somit auch zur zangenseitigen, d. h. gegenüberliegenden Reibfläche, da diese mit dem Spulenträger fest verbunden ist. Das Einjustieren der jeweiligen Ausgangslage der Ankerscheibe erfolgt durch Reibschluß des Kipphebels 8 auf dem feststehenden Führungsbolzen 7.

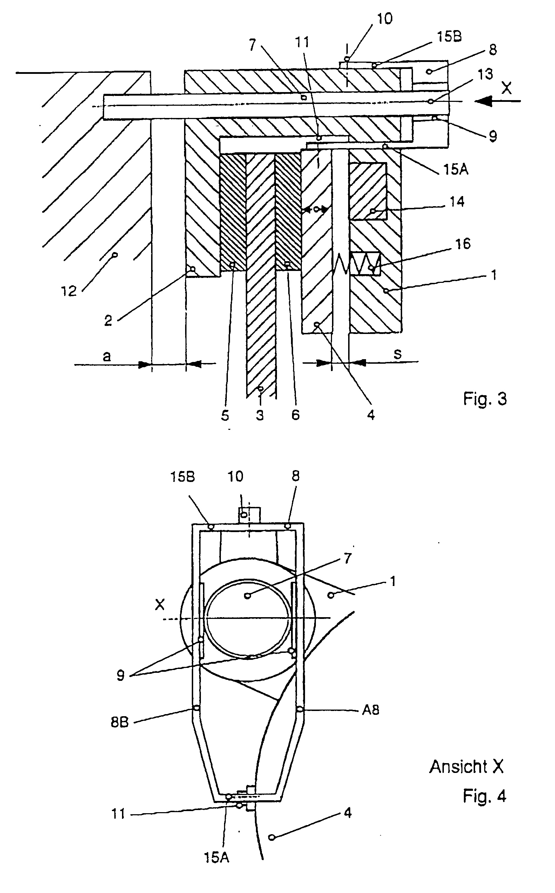

Der Kipphebel 8 ist ein Formteil aus Federbandstahl mit zwei einander gegenüberstehenden Schenkeln 8A, 8B, die beiderseits des feststehenden Bolzens 7 angreifen und auf deren Innenflächen Reibbeläge 9 aufgebracht sind, um den Kipphebel 8 wie in Fig. 4 ersichtlich am feststehenden Bolzen 7 im Reibeingriff festzuhalten. Das Maß der Auffederung und die Reibbeläge bestimmen die axiale Reibkraft auf dem Führungsbolzen. Der Hebel besitzt zwei entgegengesetzt angebrachte biegeweiche Zungen15A und 15B, deren eine Zunge 15A mit der Ankerscheibe 4 und die zweite Zunge 15B mit dem Bremssattel 2 spielfrei verbunden wird. Das Hebelverhältnis der Zungen zu der Mitte der Führungsbolzen 7 beträgt ca. 1:1.

Bei eingefallener Bremse und Veränderung der Lage der Bremsscheibe durch irgendeine Belastungsänderung verschieben die beiden Zungen 15A und 15B die gesamte Klemmvorrichtung axial auf dem Führungsbolzen 7. Beim Bestromen der Magnetspule 14 der Bremse bewegt sich die Ankerscheibe 4 in Richtung Spulenträger 1. Die ankerscheibenseitige Zunge 15A überträgt diese Bewegung auf den Kipphebel 8. Dieser leitet bei ausreichender Haftreibung auf dem Führungsbolzen 7 die Gegenbewegung der Zunge 15B ein. Die Luftspalte zwischen der Bremsscheibe 3 und den beiden Reibbelägen werden im Ergebnis in etwa gleich groß sein, nämlich s/2.

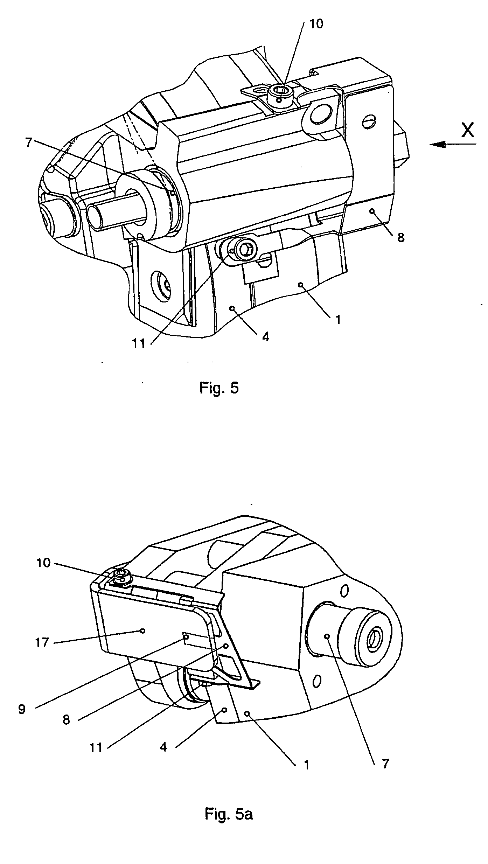

Die Fig. 5a ist eine Ansicht einer weiteren Ausführungsform. Der Unterschied besteht darin, daß der Bügel 8 mit den Reibbelägen 9 nicht direkt auf dem Bolzen 7 sich verschieben kann, sondern ein weiterer Bügel 17 vorhanden ist, welcher mit dem Bolzen 7 in Verbindung steht.

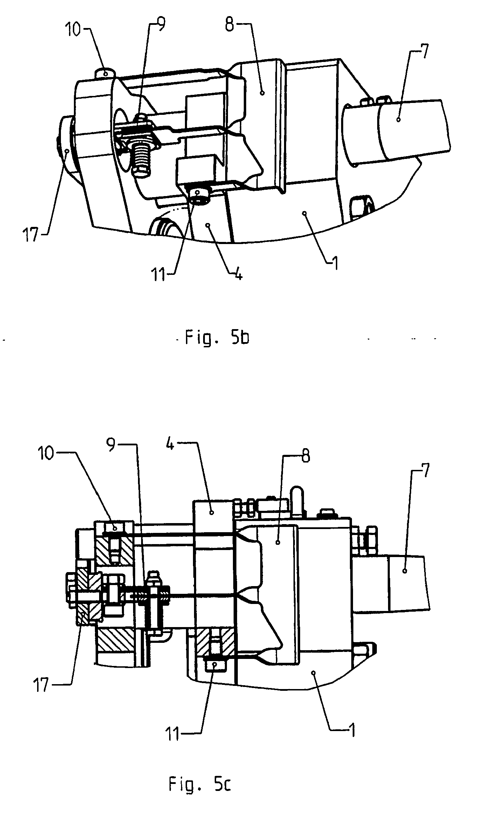

In den Fig. 5b und Fig. 5c wird ebenfalls eine weitere Ausführungsform gezeigt, bei welcher wiederum ein separater Bügel 17 mit dem Bolzen 7 verbunden ist und die axiale Verschiebung durch Reibung am Reibbelag 9 zwischen Bügel 8 und Bügel 17 stattfindet.

### Bezugszeichenliste

- 1: Bremsenkörper / Spulenträger
- 2: Bremssattel
- 3: Bremsscheibe
- 4: Ankerscheibe
- 5: Linker Reibbelag
- 6: Rechter Reibbelag
- 7: Feststehender Bolzen
- 8: Büsel / Kipphebel
- 8A: rechter Schenkel von 8 in Fig. 4
- 8B: linker Schenkel von 8 in Fig. 4
- 9: Reibbeläge am Bügel 8
- 10: Befestigungsschraube am Bremssattel
- 11: Befestigungsschraube an Ankerscheibe
- 12: Feststehendes Gehäuse
- 13: Drehpunkt von 8 am feststehenden Bolzen 7
- s: Luftspalt zwischen Bremsenkörper 1 und Ankerscheibe 4
- s/2: linker und rechter Luftspalt zwischen Bremsenscheibe 3 und linkem Reibbelag 5 und rechtem Reibbelag 6
- a: Abstand festehendes Gehäuse 12 zum Bremssattel 2
- 14: Magnetspule in 1
- 15A: biegeweiche Zunge an Ankerscheibe 4 angeschraubt
- 15B: biegeweiche Zungen an Bremssattel 2 angeschraubt
- 16: Druckfedern der Bremse
- 17: Bügel (oder ähnliches Bauteil)

## Patentansprüche

1. Zangenbremse für eine Bremsscheibe (3), insbesondere für Aufzugsantriebe, mit einem auf einem feststehenden Bolzen (7) schwimmend gelagerten Bremsenkörper (1) und einem die Bremsscheibe (3) vom Umfang derselben her übergreifenden Bremsensattel (2), sowie mit einer in den Bremsenkörper (1) integrierten Magnetspule (14) zum elektromagnetischen Anziehen einer federdruckbeaufschlagten Ankerscheibe (4) gegen den Bremsenkörper (1), wobei die Ankerscheibe (4) und der axial gegenüberliegende Teil des Bremsensattels (2) mit Reibbelägen (5, 6) zum Angriff an den beiden Stirnseiten der Bremsscheibe (3) ausgestattet ist,
**dadurch gekennzeichnet, daß**
auf dem feststehenden Bolzen (7) oder einem hiermit in Verbindung stehenden Bügel (17) oder ähnlichem Bauteil ein zweiarmiger Kipphebel oder Bügel (8) schwenkbar gelagert ist, der mit zwei an entgegengesetzten Enden des Hebels angebrachten Zungen (15A,15) versehen ist, wobei die eine Zunge (15A) mit der Umfangsfläche der Ankerscheibe (4) und die andere Zunge (15B) mit dem Bremsensattel verbunden ist, und zwar derart, daß der Kipphebel oder Bügel (8) den Weg der Ankerscheibe (4) beim Lüften der Bremse zugleich in eine Bewegung des Bremsensattels (2) in entgegengesetzte Richtung umlenkt, um einen Luftspalt (s/2) auf beiden Seiten der Bremsscheibe (3) zu erreichen.

2. Zangenbremse nach Anspruch 1, **dadurch gekennzeichnet, daß** der Kipphebel oder Bügel (8) zwei zueinander parallele Abschnitte (8A, 8B) tangentenartig beidseits des feststehenden Bolzens (7) aufweist, wobei die Abschnitte sich über Reibbeläge (9) per Haftreibung am Bolzen (7) festklammern und derart den verschiebbaren Drehpunkt (13) am feststehenden Bolzen (7) definieren.

## Claims

1. Caliper brake for a brake disc (3) particularly in elevator drives, comprising a brake body (1) mounted to float on a fixed bolt (7), a caliper (2) straddling brake disc (3) on the periphery thereof, and a solenoid (14) integrated in brake body (1) to magnetically attract a spring-biased armature disc (4) against brake body (1), said armature disc (4) and the axially opposite portion of caliper (2) having friction linings (5, 6) thereon to engage the two faces of brake disc (4), **characterized in that** a dual-arm rocker lever (8) is pivotally mounted on said fixed bolt (7) or on a bracket (17) connected thereto or on any component equivalent thereto, the rocker lever including two tongues (15A, 15B) provided at opposite ends thereof and having the one tongue (15A) connected to the peripheral surface of armature disc (4) and the other tongue (15B) connected to the caliper, said connections being such that, as the brake disengages, rocker lever or bracket (8) converts the path of armature disc (4) to an oppositely directed movement of caliper (2) so as to provide an air gap (s/2) on either side of brake disc (3).

2. Caliper brake as in claim 1, **characterized in that** said rocker lever or bracket (8) comprises two mutually parallel sections (8A, 8B) tangential to both sides of fixed bolt (7), said sections clinging to bolt (7) through adhesive friction exerted by friction linings (9) to so define a movable fulcrum (13) on fixed bolt (7).

## Revendications

1. Frein à mâchoires pour un disque de frein (3), en particulier pour des entraînements d'ascenseurs, comprenant un corps de frein (1) monté flottant sur un axe fixe (7) et un étrier de frein (2) recouvrant le disque de frein (3) à partir du pourtour de ce dernier, ainsi qu'une bobine magnétique (14), intégrée dans le corps de frein (1), pour l'attraction électromagnétique d'un disque d'induit (4) sous pression de ressort contre le corps de frein (1), le disque d'induit (4) et la partie en vis-à-vis axial de l'étrier de frein (2) étant équipés de garnitures de friction (5, 6) pour la prise sur les deux côtés frontaux du disque de frein (3), **caractérisé en ce qu'**un levier pivotant à deux bras ou étrier (8) est monté pivotant sur l'axe fixe (7) ou un étrier (17) en liaison avec ce dernier ou un composant analogue, avec deux lames (15A , 15B) montées sur des extrémités opposées du levier, une lame (15A) étant assemblée avec la surface périphérique du disque d'induit (4) et l'autre lame (15B) avec l'étrier de frein, à savoir de telle sorte que le levier pivotant ou étrier (8) change la direction de la course du disque d'induit (4), lors du desserrage du frein, en un mouvement de l'étrier de frein (2) dans la direction opposée, pour obtenir un entrefer (s/2) sur les deux côtés du disque de frein (3).

2. Frein à mâchoires suivant la revendication 1, **caractérisé en ce que** le levier pivotant ou étrier (8) comporte deux sections parallèles entre elles (8A, 8B) en tangente de part et d'autre de l'axe fixe (7), les sections se bridant par frottement statique sur l'axe (7) par l'intermédiaire des garnitures de friction (9), et définissant ainsi le point d'appui mobile (13) sur l'axe fixe (7).
